# EUROPÄISCHE PATENTANMELDUNG

(11) **EP 3 699 148 A1**
(43) Veröffentlichungstag der Anmeldung: **26.08.2020**
(21) Anmeldenummer: 19157982.0
(22) Anmeldetag: 19.02.2019
(51) Int. Cl.: C02F 3/00, C02F 3/30

(54) **AUTOMATISIERTE REGELUNG DER SAUERSTOFFKONZENTRATION DES BELEBUNGSBECKENS EINER ABWASSERBEHANDLUNGSANLAGE**

(71) Anmelder: Siemens Aktiengesellschaft, 80333 München (DE)
(72) Erfinder: Brandstetter, Veronika, 81673 München (DE); Lade, Markus, 91052 Erlangen (DE); Sichel, Cosima, 76761 Rülzheim (DE); Sohr, Annelie, 81929 München (DE); Wehrstedt, Jan Christoph, 81829 München (DE)

(57) **Zusammenfassung**

Die Erfindung gibt ein automatisiertes Verfahren zur Ermittlung einer Sollkurve der Sauerstoffzufuhr für die automatisierte Regelung der Sauerstoffkonzentration des Belebungsbeckens einer Abwasserbehandlungsanlage, mit den Schritten:
- Bereitstellen eines Simulationsmodells zum Simulieren der Prozesse im Belebungsbecken,
- Erfassen von ersten Parametern,
- Bereitstellen von zweiten Parametern, wobei mindesten einer der zweiten Parameter ein die Energieträgerkosten (4) beeinflussender Parameter ist,
- Kalibrieren des Simulationsmodells durch ein Kalibrierungsverfahren (7) basierend auf zumindest einem der ersten Parameter,
- Bereitstellen eines Optimierungsalgorithmus (6), der ausgebildet ist, mithilfe der aus dem Simulationsmodell gewonnenen Sauerstoffkonzentration und den zweiten Parametern die Sollkurve der Sauerstoffzufuhr in das Belebungsbecken bei einem Minimum an Energieträgerkosten (4) für die Bereitstellung der Sauerstoffzufuhr zu ermitteln, und
- Verwenden der Sollkurve zur Regelung der Sauerstoffzufuhr des Belebungsbeckens der Abwasserbehandlungsanlage (10).

Die Erfindung betrifft des Weiteren ein System (1) mit Recheneinheit (2) und Sensoreinheit (3), ein Computerprogrammprodukt und ein computerlesbares Medium.

Die Erfindung kann insbesondere zur Regelung der Sauerstoffkonzentration des Belebungsbeckens einer Abwasserbehandlungsanlage (10) verwendet werden.

## Beschreibung

### HINTERGRUND DER ERFINDUNG

### Gebiet der Erfindung

Die vorliegende Erfindung betrifft ein automatisiertes Verfahren zur Ermittlung einer Sollkurve der Sauerstoffzufuhr für die automatisierte Regelung der Sauerstoffkonzentration des Belebungsbeckens einer Abwasserbehandlungsanlage. Die Erfindung betrifft des Weiteren ein System mit Recheneinheit und Sensoreinheit, ein Computerprogrammprodukt und ein computerlesbares Medium. Die Erfindung kann insbesondere zur Regelung der Sauerstoffkonzentration des Belebungsbeckens einer Abwasserbehandlungsanlage verwendet werden.

### Beschreibung des Stands der Technik

Kläranlagen sind komplexe verfahrenstechnische Anlagen, in denen viele komplexe Prozesse für die Wasseraufbereitung ablaufen. Durch diese Prozesse wird aus ankommendem Abwasser mit unterschiedlicher Zusammensetzung aufbereitetes Wasser mit garantierten Qualitätsmaßen am Ausgang der Kläranlage. Der aufwändigste Aufbereitungsteil findet im Belebungsbecken statt, wobei unter großem Energieaufwand Sauerstoff eingetragen wird und unter Verwendung von organischem Belebungsschlamm die Stickstoffanteile im Abwasser reduziert werden. Dafür ist ein gutes Prozessverständnis nötig.

Derzeit wird der Betrieb des Belebungsbeckens über eine konventionelle Steuerung unterteilt auf mehrere Zonen gesteuert, für die diverse Steuerungsstrategien vorliegen. Dabei wird in der Regel der Sauerstoffgehalt als Stellwert verwendet. Hier gibt es verschiedene Konzepte:
- Im intermittierenden Betrieb wird je nach Sauerstoffwert bzw. einer vorgegebenen Zeit Sauerstoff dem System hinzugefügt oder die Zufuhr unterbrochen.
- Größere Anlagen bestehen meist aus Beckenabschnitten, innerhalb derer der Sauerstoffwert geregelt wird. Oft wird jeder Abschnitt auf konstante Werte geregelt oder die Sauerstoffzufuhr je nach Grenzwert zu oder abgeschaltet, oder es werden mehrere Becken mit Sauerstoff versorgt, wobei als Beobachtungswert nur der Sauerstoffgehalt im letzten Becken verwendet wird.
- Siemens schlägt einen datengetriebenen MPC für die Sauerstoffregelung vor. Dies ist ein mehrstufiger Regler, der auch Zuflussmenge und Stoffkonzentrationen sowie die Rezirkulation berücksichtigt [Siemens (2015). Optimization of Sewage Treatment Plants by Advanced Process Control. https://w3.siemens.com/mcms/water-industry/en/your-waterplant/Documents/Sewage-Treatment-Plants.pdf].
- Bei Seggelke et al. ist das Optimierungsziel nicht die Energieträgerkosten, sondern die Reduktion der Gewässerbelastung durch Entlastungen im Abwassersystem. Stellschraube ist in diesem Fall nicht die Sauerstoffzufuhr, sondern das Drosseln des Zuflusses aus dem Netz [Seggelke, K., Rosenwinkel, K. H., Vanrolleghem, P. A., & Krebs, P. (2005). Integrated operation of sewer system and WWTP by simulation-based control of the WWTP inflow. Water Science and Technology, 52(5), 195.].

Zusammenfassend basieren alle Verfahren auf Regelung aufgrund von aktuellen Messwerten d.h. dem Ist-Zustand (überwiegend nur Messung Sauerstoffkonzentration) im System, d.h. sie agieren nicht präventiv.

### ZUSAMMENFASSUNG DER ERFINDUNG

Die Aufgabe der Erfindung besteht darin, den Stand der Technik hinsichtlich der Regelung der Sauerstoffkonzentration des Belebungsbeckens einer Abwasserbehandlungsanlage zu verbessern.

Die Erfindung ergibt sich aus den Merkmalen der unabhängigen Ansprüche. Vorteilhafte Weiterbildungen und Ausgestaltungen sind Gegenstand der abhängigen Ansprüche. Weitere Merkmale, Anwendungsmöglichkeiten und Vorteile der Erfindung ergeben sich aus der nachfolgenden Beschreibung.

Ein Aspekt der Erfindung besteht darin, ein automatisiertes Verfahren und System bereitzustellen, mit dem die Regelung der Sauerstoffzufuhr des Belebungsbeckens einer Abwasserbehandlungsanlage über eine Standard-Steuerung unterstützt wird.

Die Erfindung beansprucht ein automatisiertes Verfahren zur Ermittlung einer Sollkurve der Sauerstoffzufuhr für die automatisierte Regelung der Sauerstoffkonzentration des Belebungsbeckens einer Abwasserbehandlungsanlage. Das automatisierte Verfahren beinhaltet die folgenden Schritte:
- Bereitstellen eines Simulationsmodells zum Simulieren der Prozesse im Belebungsbecken,
- Erfassen von ersten Parametern,
- Bereitstellen von zweiten Parametern, wobei mindesten einer der zweiten Parameter ein die Energieträgerkosten beeinflussender Parameter ist,
- Kalibrieren des Simulationsmodells durch ein Kalibrierungsverfahren basierend auf zumindest einem der ersten Parameter,
- Bereitstellen eines Optimierungsalgorithmus, der ausgebildet ist, mithilfe der aus dem Simulationsmodell gewonnenen Sauerstoffkonzentration und den zweiten Parametern die Sollkurve der Sauerstoffzufuhr (die Sollkurve der Sauerstoffzufuhr ist auch als Set-Points bezeichenbar) in das Belebungsbecken bei einem Minimum an Energieträgerkosten für die Bereitstellung der Sauerstoffzufuhr zu ermitteln, und
- Verwenden der Sollkurve zur Sauerstoffzufuhr des Belebungsbeckens der Abwasserbehandlungsanlage.

Die Prozesse im Belebungsbecken werden beispielsweise durch Reaktionsgeschwindigkeiten und/ oder Änderungen von kinematischen und stöchiometrischen Parametern beschrieben. Ein stöchiometrischer Parameter ist eine Verhältniszahl für Stoffmengenverhältnisse umgesetzt in chemischer Reaktion.

In einer weiteren Ausführung sind die Prozesse im Belebungsbecken hydraulische Prozesse und/oder Stofftransporte und/ oder Denitrifikation/Nitrifikation im Belebungsbecken.

In einer weiteren Ausführung wird das automatisierte Verfahren in regelmäßigen Abständen (z.B. alle 5 oder 10 Minuten) wiederholt durchgeführt. Dadurch, dass das System nur Set-Points/ Sollkurven der Sauerstoffkonzentration vorgibt, ist nicht gewährleistet, dass die Automatisierung diese wirklich erfüllen kann. Dies wird jedoch durch die zyklische Abarbeitung/ die regelmäßig wiederholte Durchführung ausgeglichen.

In einer weiteren Ausführung sind die ersten Parameter kinematische und/ oder stöchiometrische Parameter und/ oder Stoffkonzentrationen. Die Stoffkonzentrationen werden zumindest teilweise über Sensoren der Abwasserbehandlungsanlage erfasst. Die kinematischen Parameter können Reaktionsgeschwindigkeiten sein. Ein stöchiometrischer Parameter ist eine Verhältniszahl für Stoffmengenverhältnisse umgesetzt in chemischer Reaktion.

In einer weiteren Ausführung sind die zweiten Parameter erwartete Zuflüsse in die Abwasserbehandlungsanlage und/ oder Energieträgerpreise sind. Die Zuflüsse können Regenmengen und/ oder Zuflüsse aus Haushalten und Industrie sein. Die Energieträgerpreise können der Strompreis sein.

So werden neben einer Erfassung von den ersten Parametern, welche im Falle von Stoffkonzentrationen über Sensoren erfasst werden, auch Vorhersagen über die zu erwartenden Zuflüsse inkl. Stofftransport über einen längeren Zeitraum (z.B. aus SIWA Sewer), sowie die Energieträgerkosten einbezogen.

In einer weiteren Ausführung werden die Zuflüsse, die nicht direkt in das Belebungsbeckenfließen, angepasst. Zuflüsse können beispielsweise bevor sie in das das Belebungsbecken fließen andere Becken passieren. Bezüglich der Einflüsse, die die anderen Becken auf die Zuflüsse haben, werden die Zuflüssen durch diese weitere Ausführung der Erfindung angepasst.

In einer weiteren Ausführung weist der Optimierungsalgorithmus eine Zielfunktion, mindestens eine Nebenbedingung und mindestens eine Beschränkung auf. Dabei ist die Zielfunktion an die Energieträgerkosten gekoppelt, eine der Nebenbedingungen das sich aus dem Simulationsmodell ergebende differentialalgebraische System, und eine der Beschränkungen eine im mittleren Wertebereich liegende Sauerstoffkonzentration im Endzustand, die ungleich Null ist.

Für die Sauerstoffkonzentration wird somit eine Bedingung aufgestellt, die festlegt, dass diese Konzentration in einem mittleren Wertebereich liegt. Dies hat den Vorteil, dass vermieden wird, dass ein Optimierer als Endzustand den Sauerstoff durchgehend gleich Null setzt, was energetisch günstig ist, aber für den weiteren Betrieb der Anlage nach dem Optimierungszeitraum zu Problemen führt.

In einer weiteren Ausführung ist das Simulationsmodell ein Activated sludge models (ASM), ergänzt um ein hydraulisches Modell für den Stofftransport. Für den technischen Prozess im Belebungsbecken existiert somit ein Simulationsmodell. Dieses beschreibt den hydraulischen Prozess, den Stofftransport im Belebungsbecken und die Denitrifikation/Nitrifikation im Belebungsbecken (ASM).

Das Simulationsmodell kann dabei durch ein Kalibrierungsverfahren (insbesondere basierend auf den letzten Messwerten im Belebungsbecken) kalibriert werden. Das Kalibrierungsverfahren kann einen Klassifikationsalgorithmus verwenden.

In einer weiteren Ausführung ist der Optimierungsalgorithmus ausgebildet, ein optimales Steuerungsproblem [Bryson, A., & Ho, Y. C. (1975). Applied optimal control: Optimization, estimation, and control (revised edition). Levittown, Pennsylvania: Taylor & Francis.] oder ein Mixed Integer Nonlinear Programming- (MINLP-) Problem [Lee, J., & Leyffer, S. (Eds.). (2011). Mixed integer nonlinear programming (Vol. 154). Springer Science & Business Media.] zu lösen. Ein MINLP-Problem wird gelöst, falls das Simulationsmodell diskretisiert vorliegt.

Die Zielfunktion des Optimierungsproblems ist der Energieträgerpreise bzw. bei festen Tarifen der Strom- oder Energieverbrauch bzw. bei flexiblen Tarifen der Energieträgerpreis oder der Strompreis, der sich aus den Leistungskurven der Kompressoren für die Sauerstoffzufuhr und deren Drehzahl bestimmen lässt. Nebenbedingung des Systems ist das Differentialalgebraische System, welches sich aus der Simulation ergibt. Außerdem werden für ausgewählte Stoffe (Sauerststoff, Stickstoffverbindungen) punktweise Beschränkungen angegeben. Dadurch werden länderspezifische Grenzwerte eingehalten. Um die gesetzlichen Randbedingungen zu erfüllen werden außerdem Grenzwerte für die Abflusskonzentrationen als Nebenbedingungen aufgestellt.

Abschließend wird (wie bereits zuvor erwähnt) für die Sauerstoffkonzentration eine Bedingung aufgestellt, die festlegt, dass diese Konzentration in einem mittleren Wertebereich liegt, um zu vermeiden, dass der Optimierer als Endzustand den Sauerstoff durchgehend gleich Null setzt, was energetisch günstig ist, aber für den weiteren Betrieb der Anlage nach dem Optimierungszeitraum zu Problemen führt.

Das Optimierungsproblem wird nun für einen festen Zeithorizont (z.B. 24 h) gelöst und die Lösung dem Anlagenfahrer als Set-Point für die Sauerstoffregelung / Sollkurve der Sauerstoffkonzentration vorgeschlagen. Der Set-Point bzw. die Sollkurve der Sauerstoffkonzentration kann dann manuell oder automatisch übernommen werden. Dieser Schritt kann wie bereits zuvor erwähnt fortlaufend (z.B. alle 5 oder 10 Minuten) wiederholt werden.

In einer weiteren Ausführung werden zusätzlich Prozesse in vor- und/oder nachgeschalteten Becken (dem Belebungsbecken vor- und/ oder nachgeschalteten Becken) der Abwasserbehandlungsanlage in das Simulationsmodell einbezogen werden. Das können zum Beispiel Becken der Vor- und/oder Nachklärung sein.

Da die Zuflüsse zur Kläranlage nicht direkt in das Belebungsbecken fließen, sondern erst gewisse Vorklärabschnitte passieren sowie möglicherweise auch Rückhaltebecken existieren, muss basierend auf den Steuerungsregelungen dieser Einrichtungen der Zufluss/ die Zuflüsse umgerechnet werden. So können mögliche Verzögerungszeiten berücksichtigt werden.

Alternativ kann das Simulationsmodell auch noch um Vorklärung oder Nachklärung erweitert werden. Da diese Anlagenabschnitte im Verhältnis einen deutlich niedrigeren Energiebedarf haben, ist dies aber nicht unbedingt erforderlich.

Das erfindungsgemäße Verfahren kann auch dazu verwendet werden, dass dem Anlagenfahrer die Möglichkeit gegeben wird What-if-Szenarien durchzuspielen, in denen er selber feste oder dynamische Sauerstoff-Set-Points/ Sollkurven der Sauerstoffkonzentration vorgibt und den Einfluss auf die Wasseraufbereitung bzw. auf den Energieverbrauch analysiert.

Die Erfindung beansprucht außerdem ein System aufweisend eine Recheneinheit, wobei die Recheneinheit ausgebildet ist, ein erfindungsgemäßes Verfahren auszuführen.

In einer weiteren Ausführung ist die Recheneinheit in einer Cloud ausgebildet.

In einer weiteren Ausführung ist mindestens eine Sensoreinheit ausgebildet, mindestens einen der ersten Parameter zu ermitteln.

In einer weiteren Ausführung wird die Sollkurve automatisch oder von Hand getriggert und dem System übergeben. Der Set-Point bzw. die Sollkurve der Sauerstoffkonzentration kann manuell oder automatisch übernommen werden.

Die Erfindung beansprucht außerdem ein Computerprogrammprodukt, umfassend ein Computerprogramm, wobei das Computerprogramm in eine Speichereinrichtung einer Recheneinheit ladbar ist, wobei mit dem Computerprogramm die Schritte eines erfindungsgemäßen Verfahrens ausgeführt werden, wenn das Computerprogramm auf der Recheneinheit ausgeführt wird.

Die Erfindung beansprucht außerdem ein computerlesbares Medium, auf welchem ein Computerprogramm gespeichert ist, wobei das Computerprogramm in eine Speichereinrichtung einer Recheneinheit ladbar ist, wobei mit dem Computerprogramm die Schritte eines erfindungsgemäßen Verfahrens ausgeführt werden, wenn das Computerprogramm auf der Recheneinheit ausgeführt wird.

Diese Erfindung sieht vor, dass die Sollkurve für die Sauerstoffregelung nicht mehr durch eine einfache Regelung, sondern durch ein automatisiertes Verfahren mit einer Assistenzfunktion (auch als Assistenzsystem bezeichenbar) bestimmt wird. Hierzu wird eine Assistenzfunktion entwickelt, die aus mehreren Komponenten (Simulation und Optimierung) besteht und z.B. als Cloud-Lösung realisiert werden kann.

Ein erfinderische Schritt liegt darin, dass anstelle einer Basisautomatisierung eine Lösung vorgeschlagen wird, die aus verschiedenen Datenquellen (Software, Sensorik/ Sensoreinheit) Set-Points für die Sauerstoffregelung/ eine Sollkurve der Sauerstoffkonzentration definiert, welche von der Automatisierung übernommen werden, anstatt dass diese sie nur aus Beobachtungswerten/ Messwerten des technischen Prozesses gesteuert werden.

Neben den Rechenkernen umfasst das auch eine Cloud-Umgebung sowie einen Anschluss/ eine Integration an die reale Automatisierung.

### KURZE BESCHREIBUNG DER ZEICHNUNGEN

Die Besonderheiten und Vorteile der Erfindung werden aus den nachfolgenden Erläuterungen mehrerer Ausführungsbeispiele anhand von schematischen Zeichnungen ersichtlich.

Es zeigen
- Fig. 1: ein Diagramm des erfindungsgemäßen Verfahrens und
- Fig. 2: ein erfindungsgemäßes System.

### DETAILLIERTE BESCHREIBUNG DER ERFINDUNG

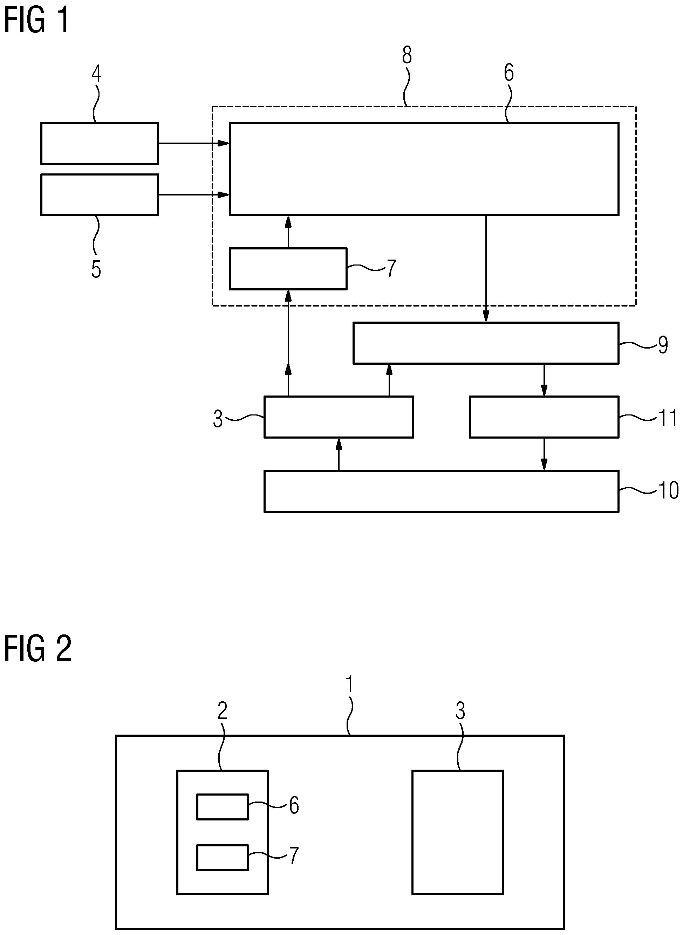

Fig. 1 zeigt ein Diagramm des erfindungsgemäßen Verfahrens. Das Verfahren wird zur Ermittlung einer Sollkurve der Sauerstoffzufuhr für die automatisierte Regelung der Sauerstoffkonzentration des Belebungsbeckens einer Abwasserbehandlungsanlage 10 verwendet.

In einem ersten Schritt wird ein Simulationsmodell zum Simulieren der Prozesse im Belebungsbecken bereitgestellt (nicht dargestellt). Die Prozesse im Belebungsbecken beinhalten vorliegende Stoffkonzentrationen (zum Beispiel Sauerstoff und Stickstoffverbindungen und Reaktionsgeschwindigkeiten).

In einem zweiten Schritt werden in einer Abwasserbehandlungsanlage 10 über eine Sensoreinheit 3 Daten, die ersten Parameter, erfasst.

In einem dritten Schritt werden zweite Parameter bereitgestellt. Die zweiten Parameter können prognostizierte Daten zu Energieträgerkosten 4 (z.B. Strompreisen) und zu Zuflüsse 5 (z.B. von Industrie und Haushalten oder/ und durch Regen) sein. Mindestens einer der zweiten Parameter ist ein die Energieträgerkosten 4 beeinflussender Parameter.

Die ersten Parameter werden in einem vierten Schritt zur Simulationskalibrierung 7 verwendet (die Simulationskalibrierung entspricht der Kalibrierung des Simulationsmodells).

In einem fünften Schritt wird ein Optimierungsalgorithmus 6 bereitgestellt. Der Optimierungsalgorithmus 6 ist ausgebildet, mithilfe der aus dem Simulationsmodell gewonnenen Sauerstoffkonzentration und den zweiten Parametern die Sollkurve der Sauerstoffzufuhr in das Belebungsbecken bei einem Minimum an Energieträgerkosten 4 für die Bereitstellung der Sauerstoffzufuhr zu ermitteln. Der Optimierungsalgorithmus 6 bekommt prognostizierte Daten (zweite Parameter) zu Energieträgerkosten 4 (z.B. Strompreisen) und zu Zuflüsse 5 (z.B. von Industrie und Haushalten oder/ und durch Regen) bereitgestellt.

In einem sechsten Schritt wird die Sollkurve zur Regelung der Sauerstoffzufuhr des Belebungsbeckens der Abwasserbehandlungsanlage 10 verwendet.

Der Optimierungsalgorithmus 6 und die Simulationskalibrierung 7 können in einer Cloud-Umgebung 8 ausgebildet sein. Die durch den Optimierungsalgorithmus 6 ermittelte Sollkurve der Sauerstoffzufuhr wird an die klassische Basisautomatisierung 9 weitergegeben und als Sollkurve zur Regelung der Sauerstoffzufuhr des Belebungsbeckens der Abwasserbehandlungsanlage 10 verwendet. Zur Regelung der Sauerstoffzufuhr des Belebungsbeckens der Abwasserbehandlungsanlage 10 wird die Aktorik 11 verwendet.

Fig. 2 zeigt ein erfindungsgemäßes System 1. Mit einer Recheneinheit 2 und einer Sensoreinheit 3. Die Recheneinheit 2 weist einen Optimierungsalgorithmus 6 und eine Simulationskalibrierung 7 auf.
Obwohl die Erfindung im Detail durch die Ausführungsbeispiele näher illustriert und beschrieben wurde, ist die Erfindung durch die offenbarten Beispiele nicht eingeschränkt und andere Variationen können vom Fachmann daraus abgeleitet werden, ohne den Schutzumfang der Erfindung zu verlassen.

## Patentansprüche

1. Automatisiertes Verfahren zur Ermittlung einer Sollkurve der Sauerstoffzufuhr für die automatisierte Regelung der Sauerstoffkonzentration des Belebungsbeckens einer Abwasserbehandlungsanlage (10), mit den Schritten:
- Bereitstellen eines Simulationsmodells zum Simulieren der Prozesse im Belebungsbecken,
- Erfassen von ersten Parametern,
- Bereitstellen von zweiten Parametern, wobei mindesten einer der zweiten Parameter ein die Energieträgerkosten (4) beeinflussender Parameter ist,
- Kalibrieren des Simulationsmodells durch ein Kalibrierungsverfahren (7) basierend auf zumindest einem der ersten Parameter,
- Bereitstellen eines Optimierungsalgorithmus (6), der ausgebildet ist, mithilfe der aus dem Simulationsmodell gewonnenen Sauerstoffkonzentration und den zweiten Parametern die Sollkurve der Sauerstoffzufuhr in das Belebungsbecken bei einem Minimum an Energieträgerkosten (4) für die Bereitstellung der Sauerstoffzufuhr zu ermitteln, und
- Verwenden der Sollkurve zur Regelung der Sauerstoffzufuhr des Belebungsbeckens der Abwasserbehandlungsanlage (10).

2. Automatisiertes Verfahren nach Anspruch 1,
wobei die Prozesse im Belebungsbecken hydraulische Prozesse und/oder Stofftransporte und/ oder Denitrifikation/Nitrifikation im Belebungsbecken sind.

3. Automatisiertes Verfahren nach einem der vorherigen Ansprüche, **dadurch gekennzeichnet,**
**dass** das automatisierte Verfahren in regelmäßigen Abständen wiederholt durchgeführt wird.

4. Automatisiertes Verfahren nach einem der vorherigen Ansprüche,
wobei die ersten Parameter kinematische und/ oder stöchiometrische Parameter und/ oder Stoffkonzentrationen sind, wobei die Stoffkonzentrationen zumindest teilweise über Sensoren der Abwasserbehandlungsanlage (10) erfasst werden.

5. Automatisiertes Verfahren nach einem der vorherigen Ansprüche,
wobei die zweiten Parameter erwartete Zuflüsse (5) in die Abwasserbehandlungsanlage und/ oder Energieträgerpreise (4) sind.

6. Automatisiertes Verfahren nach Anspruch 5,
wobei die Zuflüsse (5), die nicht direkt in das Belebungsbeckenfließen, angepasst werden.

7. Automatisiertes Verfahren nach einem der vorherigen Ansprüche,
wobei der Optimierungsalgorithmus (6) eine Zielfunktion, mindestens eine Nebenbedingung und mindestens eine Beschränkung aufweist, wobei die Zielfunktion an die Energieträgerkosten (4) gekoppelt ist, eine der Nebenbedingungen das sich aus dem Simulationsmodell ergebende differentialalgebraische System ist, und eine der Beschränkungen eine im mittleren Wertebereich liegende Sauerstoffkonzentration im Endzustand, die ungleich Null ist, ist.

8. Automatisiertes Verfahren nach einem der vorherigen Ansprüche, **dadurch gekennzeichnet,**
**dass** das Simulationsmodell ein Activated sludge models (ASM), ergänzt um ein hydraulisches Modell für den Stofftransport, ist.

9. Automatisiertes Verfahren nach einem der vorherigen Ansprüche, **dadurch gekennzeichnet,**
**dass** zusätzlich Prozesse in vor- und/oder nachgeschalteten Becken der Abwasserbehandlungsanlage (10) in das Simulationsmodell einbezogen werden.

10. System (1) aufweisend eine Recheneinheit (2), wobei die Recheneinheit (2) ausgebildet ist, ein Verfahren nach einem der vorhergehenden Ansprüche auszuführen.

11. System (1) nach Anspruch 10, **dadurch gekennzeichnet,**
**dass** die Recheneinheit (2) in einer Cloud (8) ausgebildet ist.

12. System (1) nach Anspruch 10 oder 11, **gekennzeichnet durch,**
mindestens eine Sensoreinheit (3), die ausgebildet ist, mindestens einen der ersten Parameter zu ermitteln.

13. System (1) nach einem der Ansprüche 10 bis 12, **dadurch gekennzeichnet,**
**dass** die Sollkurve automatisch oder von Hand getriggert, dem System (1) übergeben wird.

14. Computerprogrammprodukt, umfassend ein Computerprogramm, wobei das Computerprogramm in eine Speichereinrichtung einer Recheneinheit (3) ladbar ist, wobei mit dem Computerprogramm die Schritte eines Verfahrens nach einem der Ansprüche 1 bis 9 ausgeführt werden, wenn das Computerprogramm auf der Recheneinheit (2) ausgeführt wird.

15. Computerlesbares Medium, auf welchem ein Computerprogramm gespeichert ist, wobei das Computerprogramm in eine Speichereinrichtung einer Recheneinheit ladbar ist, wobei mit dem Computerprogramm die Schritte eines Verfahrens nach einem der Ansprüche 1 bis 9 ausgeführt werden, wenn das Computerprogramm auf der Recheneinheit (2) ausgeführt wird.
